Europäisches Patentamt

European Patent Office

Office européen des brevets

(11) Veröffentlichungsnummer: **0 159 746 B1**

# EUROPÄISCHE PATENTSCHRIFT

(45) Veröffentlichungstag der Patentschrift: **08.07.92**

(51) Int. Cl.⁵: **C04B 35/00**, C04B 35/46

(21) Anmeldenummer: **85200490.2**

(22) Anmeldetag: **01.04.85**

(54) Verfahren zur Herstellung keramischer Sinterkörper.

(30) Priorität: **11.04.84 DE 3413585**

(43) Veröffentlichungstag der Anmeldung:
**30.10.85 Patentblatt 85/44**

(45) Bekanntmachung des Hinweises auf die
Patenterteilung:
**08.07.92 Patentblatt 92/28**

(84) Benannte Vertragsstaaten:
**BE DE FR GB**

(56) Entgegenhaltungen:
EP-A- 0 042 009
FR-A- 2 365 191
GB-A- 964 726

JOURNAL OF THE AMERICAN CERAMIC SO-
CIETY, Band 64, Nr. 12, Dezember 1981, Seiten C-170-C171, Columbus, Ohio, US; M. KU-
WARARA: "Influence of stoichiometry on the
PTCR effect in porous barium titanate ceramics"

AMERICAN CERAMIC SOCIETY BULLETIN,
Band 60, Nr. 5, Mai 1981, Seiten 566-570,
Columbus, Ohio, US; Y. ENOMOTU et al.:
"Preparation of uniformly small-grained
BaTiO3"

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**BE FR GB**

(72) Erfinder: **Hennings, Detlev, Dr.
Hangstrasse 28
W-5100 Aachen(DE)**
Erfinder: **Janssen, Rolf
Daimlerstrasse 37
2000 Hamburg 50(DE)**
Erfinder: **Reijnen, Piet, Prof. Dr.
Rue d'Aix 44
B-4671 Moresnet-Chapelle(BE)**

(74) Vertreter: **Kupfermann, Fritz-Joachim,
Dipl.-Ing. et al
Wendenstrasse 35 Postfach 10 51 49
W-2000 Hamburg 1(DE)**

AMERICAN CERAMIC SOCIETY BULLETIN, Band 58, Nr. 5, Mai 1979, Seiten 512-515, Columbus, Ohio, US; T.J. CARBONE et al.: "Microstructure development in barium titanate: effects of physical and chemical inhomogeneities"

# EP 0 159 746 B1

## Beschreibung

Die Erfindung bezieht sich auf ein Verfahren zur Herstellung keramischer Sinterkörper, bei dem dem herzustellen Sinterkörper entsprechendes Ausgangsmaterial mit einem Zusatz von bereits gesintertem Ausgangsmaterial und von Verbindungen, die mit dem Ausgangsmaterial eine Schmelzphase bilden, sich jedoch nicht in das Kristallgitter des Sinterkörpers einbauen, gesintert wird.

Erdalkali-Titanate, Erdalkali-Zirkonate, Erdalkali-Stannate oder Mischkristalle derselben als z.B. Ausgangsmaterialien für den Sinterkörper dienen als Grundmaterial für eine Reihe wichtiger elektronischer Bauelemente, wie z.B. keramische Vielschichtkondensatoren, Korngrenzensperrschichtkondensatoren oder PTC-Widerstände. Sowohl bei diesen Kondensatoren als auch bei diesen Widerständen werden die elektrischen Eigenschaften in entscheidendem Ausmaß von der keramischen Mikrostruktur bestimmt. So hängen bei einem solchen keramischen Kondensator die Höhe der Dielektrizitätskonstante des Materials und die Temperaturcharakteristik desselben entscheidend von der mittleren Korngröße des Materials ab. Bei z.B. PTC-Widerständen werden die Höhe des Widerstandssprunges und der Kaltwiderstand maßgeblich von der mittleren Korngröße und der Homogenität des keramischen Gefüges bestimmt. Bei Korngrenzensperrschichtkondensatoren wird darüberhinaus die Durchschlagfestigkeit bzw. der Isolationswiderstand entscheidend über die Korngröße und die Korngrößenverteilung bestimmt. Methoden zur Kontrolle und Beeinflussung der Mikrostruktur der entsprechenden keramischen Sinterkörper sind deshalb von großer Wichtigkeit für die Herstellung der genannten elektronischen Bauelemente.

Die keramische Mikrostruktur, also die mittlere Korngröße und die Homogenität eines keramischen Gefüges, spielt jedoch auch bei anderen keramischen Sinterkörpern als solchen, wie sie für die Herstellung von elektronischen Bauelementen verwendet werden, eine wichtige Rolle. Zu denken ist z.B. an Oxidkeramik, die für Hochtemperaturprozesse eingesetzt wird, deren Lebensdauer, Festigkeitsverhalten und Temperaturwechselbeständigkeit ebenfalls von ihrer keramischen Mikrostruktur bestimmt wird. Dies gilt z.B. auch für Oxidkeramik, für die besonders gute mechanische Eigenschaften erforderlich sind, z.B. Schneidkeramik und für Bauelemente, die im Maschinenbau eingesetzt werden.

Untersuchungen über das Kornwachstum von Bariumtitanat als Ausgangsmaterial für einen keramischen Sinterkörper ergaben, daß Proben mit einem geringen $TiO_2$-Überschuß oder anderen Zusätzen, die bei einer bestimmten Temperatur mit dem Bariumtitanat eine Schmelzphase bilden, ein diskontinuierliches Kornwachstum, also eine Rekristallisation, oberhalb der eutektischen Temperatur zeigen. Dieses Phänomen gilt für andere Ausgangsmaterialien mit eine Schmelzphase bildenden Zusätzen gleichermaßen.

In Bariumtitanat mit $TiO_2$-Überschuß wird z.B. die Bildung der Phase $Ba_6Ti_{17}O_{40}$ beobachtet, die mit $BaTiO_3$ bei Temperaturen von 1310 bis 1320°C eine Schmelzphase bildet. Auch durch andere Zusätze, wie z.B. Phasengemische der Zusammensetzung $CuO-Cu_2O$ mit einem Zusatz eines weiteren Metalloxids, tritt - schon bei Temperaturen um 1050°C bis 1200°C - ein diskontinuierliches Kornwachstum (Rekristallisation) in Bariumtitanat und seinen Mischkristallen auf. Versuche der Anmelderin haben ergeben, daß als Schmelzphase bildende Verbindung auch Phasengemische der Zusammensetzung $CuO.MeO_x$, wobei $MeO_x$ das Oxid mindestens eines Elementes der III., V., VI. oder VII. Gruppe des periodischen Systems der Elemente ist, bei Erdalkali-Titanaten, Erdalkali-Zirkonaten, Erdalkali-Stannaten und Mischkristallen derselben zu einem vergrößerten Kornwachstum führen.

Das Kornwachstum innerhalb einer Schmelzphase ist, z.B. um elektrische Eigenschaften von Perowskitkeramik zu verbessern, erwünscht. Der mit dem Ausgangsmaterial eine Schmelzphase bildende Zusatz wird praktisch nicht ins Perowskitgitter eingebaut; er ist im Zustand der flüssigen Phase in der Lage, gewisse Anteile der festen Perowskitphase zu lösen und sie an anderer Stelle wieder fest auszuscheiden."Praktisch nicht ins Perowskitgitter eingebaut" bedeutet, daß in bei Sintertemperaturen < 1200°C gesinterter Perowskitkeramik ein Einbau von Elementen aus den die Schmelzphase bildenden Verbindungen ins Kristallgitter nicht nachweisbar ist und daß in bei Sintertemperaturen > 1200°C gesinterter Perowskitkeramik nur Spuren dieser Elemente in einer Menge von ≤ 0,1% nachweisbar sind. Dieser Prozeß könnte quasi als Kristallzucht aus der Schmelze angesehen werden, die hier im Mikromaßstab in einem keramischen Gefüge durchgeführt wird, wobei sich der Schmelzfluß an den Korngrenzen aufhält und die Mikrokristalle der Keramik einbettet, aber so gut wie nicht in die Kristalle eindringt. Dieser beschleunigte Diffusionstransport zwischen den Körnern der Perowskitphase kann als Grund für ein vergrößertes Kornwachstum und für ein aktiviertes Sinterverhalten angesehen werden.

Eingehende Studien zeigten, daß der Rekristallisationsvorgang in Bariumtitanat durch einen Keimbildungsprozeß initiiert wird. Einzelne Körner wachsen wesentlich schneller als die meisten der sie umgebenden Körner, so daß diese bevorzugten Körner (oder Keime) schließlich durch ihr starkes Wachstum die gesamte Mikrostruktur ausfüllen.

Anzahl und Verteilung dieser sogenannten Keime bestimmen die mittlere Korngröße des rekristallisier-

3

ten Bariumtitanats. Es ist anzumerken, daß über die Natur der Keime vom wissenschaftlichen Standpunkt her gesehen noch keine endgültige Klarheit besteht. So vermuten einige Autoren, daß nur Körner mit Kristallbaufehlern zu Keimen werden, andere vermuten, daß Körner, die innerhalb der gegebenen Korngrößenverteilung eine bestimmte Größe überschreiten, als Keime fungieren.

Ein Nachteil bei keramischen Sinterkörpern allgemein, nicht nur bei solchen mit Perowskitstruktur, ist, daß das Kornwachstum statistisch und diskontinuierlich verläuft, und die mittlere Korngröße in einer gewünschten Richtung, also auf einen bestimmten Effekt hin, praktisch nicht beeinflußt werden kann. Der Erfindung liegt die Aufgabe zugrunde, das eingangs genannte Verfahren so zu verbessern, daß diskontinuierliches Kornwachstum steuerbar und eine gewünschte mittlere Korngröße und eine gewünschte Kornverteilung einstellbar wird.

Diese Aufgabe wird erfindungsgemäß dadurch gelöst, daß dem Ausgangsmaterial bereits gesintertes Ausgangsmaterial als Keime mit einer mittleren Kristallitgröße, die mindestens dem Dreifachen der mittleren Kristallitgröße des Ausgangsmaterials entspricht, in einer Menge von mindestens 0,1 Gew.% des zu sinternden Ausgangsmaterials zugesetzt wird.

Der Erfindung liegt die Erkenntnis zugrunde, daß der Zusatz von bereits gesinterten Grobkörnern des Ausgangsmaterials, deren Kristallitdurchmesser mindestens um den Faktor 3 größer ist als der Kristallitdurchmesser des Ausgangsmaterials, die Zahl der rekristallisierenden Körner von Beginn des Sinterns an stark erhöht.

Als direkte Folge der bereits zu Beginn der Sinterung vorliegenden hohen Keimdichte erniedrigt sich die mittlere Korngröße des keramischen Gefüges stark.

Mit der Zugabe von Keimen in Form von bereits gesintertem Ausgangsmaterial einer sehr viel größeren Kristallitgröße als sie das Ausgangsmaterial aufweist, ist dem Fachmann ein wirkungsvolles Mittel an die Hand gegeben, das Kornwachstum von rekristallisierender Keramik zu steuern und gewünschten technischen Zwecken anzupassen.

Im Zusammenhang mit der Beschreibung des vorliegenden Verfahrens ist unter "Kristallitgröße" die Gefahr eines monokristallinen Bereiches im Material und unter "Partikelgröße" die Größe von Teilchen, die aus einem oder mehreren Kristalliten gebildet sind, zu verstehen; der Begriff "Korngröße" bezeichnet im vorliegenden Zusammenhang die monokristallinen oder kohärenten Gitterbereiche innerhalb des keramischen Gefüges.

Der Vollständigkeit halber ist auf DE-OS 26 41 701 hinzuweisen. Aus dieser Vorveröffentlichung war ein Verfahren zur Herstellung eines Kondensatordielektrikums mit inneren Sperrschichten auf der Basis von Bariumtitanat der allgemeinen Formel $(Ba_{1-x}M_x^{II})O.z(Ti_{1-y}M_y^{IV})O_2$ mit $M^{II}$ = Ca,Sr,Pb und/oder Mg, mit $M^{IV}$ = Zr,Sn und mit z = 1,005 bis 1,05 bekannt, bei dem dem Versatz Glattscherben mit gleich großer Teilchengröße wie das Ausgangsmaterial in relativ großer Menge (von 1 bis 70 Gew.%) zugesetzt werden. Durch diesen Glattscherbenzusatz wird die Dielektrizitätskonstante auf einen gewünschten Wert gebracht, wobei der Isolationswiderstand erhöht wird. Mit zunehmendem Anteil an Glattscherben sinkt nämlich der Wert für die Dielektrizitätskonstante ab, während der Wert für den Isolationswiderstand ansteigt. Dem bekannten Verfahren liegt die Aufgabe zugrunde, die Reproduzierbarkeit der elektrischen Werte insbesondere bei Perowskitmaterial mit Verwendung von Rutil oder Anatas als $TiO_2$-Komponente zu verbessern. Das Verfahren gemäß der vorliegenden Erfindung bezieht sich dagegen auf Sinterkörper ganz allgemein und hat ein ganz anderes Ziel, nämlich eine gewünschte mittlere Korngröße und eine gewünschte Kornverteilung im gesinterten Körper mittels Zusatz relativ geringer Mengen von bereits gesintertem Ausgangsmaterial einstellbar zu machen.

Ausführungsbeispiele der Erfindung werden beschrieben und in ihrer Wirkungsweise erläutert.

Als Ausführungsbeispiele wurden Bariumtitanatpulver mit unterschiedlichen $TiO_2$-Überschüssen hergestellt, die dadurch ab einer Temperatur von 1300 °C oder höher zur Rekristallisation (diskontinuierliches Kornwachstum) veranlaßt werden können. Nach Zusatz einer bestimmten Menge von grobkörnigen Keimen von bekannter Kristallitgröße aus bereits gesintertem Ausgangsmaterial wird die Zahl der rekristallisierten Körner (Keime) in diesem Pulver nach einer bestimmten Sinterzeit, bzw. die mittlere Korngröße nach vollständiger Rekristallisation mit einem entsprechend behandelten Pulver ohne Zusatz verglichen.

Es wurden folgende Pulver präpariert:

I. BaTiO$_3$ mit einer Partikelgrößenverteilung im Bereich von 0,3 bis 6$\mu$m mit einer mittleren Partikelgröße von 0,8$\mu$m und mit einem atomaren Verhältnis von Barium : Titan = 1 : 1,006.

II. BaTiO$_3$ gemäß I, jedoch mit einem atomaren Verhältnis von Barium : Titan = 1 : 1,02.

III. BaTiO$_3$ gemäß I, jedoch mit einem atomaren Verhältnis von Barium : Titan = 1 : 1,1.

IV. BaTiO$_3$ mit einer Kristallitgrößenverteilung im Bereich von 2$\mu$m bis 5,5$\mu$m, mit einer mittleren Kristallitgröße von 3,2$\mu$m, mit einem atomaren Verhältnis von Barium : Titan = 1 : 1,006 (Grobkorn).

V. BaTiO$_3$ gemäß II, gemischt mit 0,1 Gew.% BaTiO$_3$ gemäß IV.

4

VI. BaTiO₃ gemäß II, gemischt mit 1 Gew.% BaTiO₃ gemäß IV.

VII.BaTiO₃ gemäß II, gemischt mit 5 Gew.% BaTiO₃ gemäß IV.

Die BaTiO₃-Pulver gemäß I bis VII werden bei Temperaturen von 1310 bis 1350°C und einer Dauer von 300 bis 1500 s im gepreßten Zustand als Tabletten gesintert. Die Mikrostruktur der so hergestellten Proben wird anschließend verglichen. Das Ergebnis dieser Sinterversuche ist in der nachfolgenden Tabelle dargestellt.

**TABELLE**

| Sinter-bedingungen | BaTiO₃ gemäß I $A$ $[\%]$ | BaTiO₃ gemäß I $d$ $[\mu m]$ | BaTiO₃ gemäß III $A$ $[\%]$ | BaTiO₃ gemäß III $d$ $[\mu m]$ | BaTiO₃ gemäß II $N$ $[mm^{-2}]$ | BaTiO₃ gemäß II $A$ $[\%]$ | BaTiO₃ gemäß II $d$ $[\mu m]$ | BaTiO₃ gemäß V $N$ $[mm^{-2}]$ | BaTiO₃ gemäß V $A$ $[\%]$ | BaTiO₃ gemäß V $d$ $[\mu m]$ | BaTiO₃ gemäß VI $N$ $[mm^{-2}]$ | BaTiO₃ gemäß VI $A$ $[\%]$ | BaTiO₃ gemäß VI $d$ $[\mu m]$ | BaTiO₃ gemäß VII $N$ $[mm^{-2}]$ | BaTiO₃ gemäß VII $A$ $[\%]$ | BaTiO₃ gemäß VII $d$ $[\mu m]$ |
|---|---|---|---|---|---|---|---|---|---|---|---|---|---|---|---|---|
| 1310°C 1000 s | - | - | - | - | 64 | 4 | - | 430 | 6 | - | 2660 | 10 | - | 10350 | 25 | - |
| 1330°C 300 s | - | - | - | - | 1570 | 50 | - | 1630 | 50 | - | 4770 | 70 | - | 16450 | 95 | 5,64 |
| 1330°C 1500 s | - | - | - | , | 2080 | 85 | 21,18 | 2180 | 85 | 20,76 | 6070 | 90 | 10,88 | 16340 | 98 | 6,06 |
| 1350°C 300 s | 100 | 37 | 100 | 29 | 2500 | 100 | 22,6 | 2660 | 100 | 20,68 | 7230 | 100 | 9,24 | 14580 | 100 | 6,86 |

A = Rekristallisierte Fläche

N = Zahl der rekristallisierten Keime pro unrekristallisierte Fläche

d = mittlere Korndurchmesser der rekristallisierten Keime

Herstellung der Ausgangsmaterialien

(BaTiO$_3$ gemäß I bis III).

Als BaTiO$_3$ gemäß I wurde ein Pulver von hohem Reinheitsgrad (Summe der Verunreinigungen 200 Gew.ppm) und einer mittleren Partikelgröße von 0,8$\mu$m verwendet. Die mittlere Partikelgröße wurde durch Sedimentationsanalyse in 1%iger Natriumpyrophosphatlösung bestimmt. Das Bariumtitanat enthielt einen geringen TiO$_2$-Überschuß, entsprechend einem atomaren Verhältnis von Barium:Titan = 1 : 1,006, der durch Röntgenfluoreszenz-Analyse bestimmt wurde.

BaTiO$_3$ gemäß II und gemäß III wurden durch Zugabe von entsprechenden Mengen TiO$_2$ zu BaTiO$_3$ gemäß I auf das atomare Verhältnis von Barium:Titan = 1 : 1,02, bzw. 1 : 1,1 gebracht. Um eine möglichst gleichmäßige Verteilung des TiO$_2$ zu erzielen, wurden Bariumtitanatpulver gemäß I und TiO$_2$ in Isopropanol in einem Ultraschallbad dispergiert. Nach Abschalten des Ultraschalls setzen sich BaTiO$_3$ und TiO$_2$ sofort ab, so daß es zu keiner Entmischung kommt. Das Isopropanol kann weitgehend abdekantiert werden. Das abgesetzte Material wird anschließend bei etwa 100°C getrocknet.

Herstellung der Grobkorn-Keime (BaTiO$_3$ gemäß IV).

Etwa 350 g von Bariumtitanat-Pulver gemäß I werden in einer Presse mit einem Druck von 2,5 x 10$^8$ N/mm$^2$ zu zylindrischen Körpern verdichtet und anschließend 90 min auf einem Platinblech an Luft bei 1350°C gebrannt. Die Aufheiz- und Abkühlzeit beträgt etwa 100 min. Das nach dem Brand zu einer mittleren Kristallitgröße von 30$\mu$m gesinterte BaTiO$_3$ wird in einem Stahlmörser auf eine Partikelgröße von 80$\mu$m zerkleinert und anschließend 90 min in einer Achatkugelmühle bis zu einer mittleren Kristallitgröße von 8$\mu$m aufgemahlen.

In einer vierstufigen Trennkaskade wird das Pulver anschließend durch wiederholte Sedimentation in verschiedene Korngrößen aufgeteilt. Als Dispergiermittel dient eine 0,1%ige Natriumpyrophosphat-Lösung. Das Pulver wird so oft durch die Kaskaden geschickt, bis sich eine zwischen 2$\mu$m und 5,5$\mu$m liegende Kristallitgrößenverteilung mit einer mittleren Kristallitgröße von 3,2$\mu$m eingestellt hat.

Das Natriumpyrophosphat wird nach der Sedimentation durch mehrmaliges Spülen mit heißem Wasser ausgewaschen.

Herstellung der Gemische aus Pulvern gemäß V bis VII. Pulver gemäß II wird mit dem grobkörnigen Pulver gemäß IV in einem Ultraschallbad in Tetrahydrobenzol gemischt. Durch Zusatz von 0,1 Gew.%, 1 Gew.% und 5 Gew.% des Pulvers gemäß IV werden die Pulver gemäß V, gemäß VI und gemäß VII hergestellt.

Sintern der Proben.

Die Pulver gemäß I bis VII werden in einer üblicherweise angewendeten Tablettenpresse unter Zuhilfenahme einer verdünnten Lösung von Polyvinylalkohol als Bindemittel zu Tabletten von 6mm ⌀ und etwa 0,5mm Dicke verpreßt. Die gepreßten Tabletten werden nach dem Ausbrennen des Bindemittels anschließend sehr schnell in einen sich bereits auf Versuchstemperatur befindlichen Ofen eingebracht und dort bei Temperaturen von 1310°C bis 1350°C und einer Dauer von 300 s bis 1500 s auf einem Platinblech an Luft gesintert. Die Zahl der rekristallisierten Körner (Keime) pro Flächeneinheit wird als Mittelwert von 3 Proben nach Anfertigung von Schliffen und Ätzen durch Auswertung von Mikrophotographien bestimmt.

Aus der Tabelle geht sehr deutlich hervor, daß der Zusatz von bereits gesinterten Grobkörnern, deren Kristallitdurchmesser mindestens um den Faktor 3 größer ist als der Kristallitdurchmesser des Ausgangsmaterials, die Zahl der rekristallisierenden Körner von Beginn des Sinterns an stark erhöht. Wichtig ist, daß sich als direkte Folge der bereits zu Beginn der Sinterung vorliegenden hohen Keimdichte die mittlere Korngröße des keramischen Gefüges stark erniedrigt. Die Zahl der rekristallisierten Körner (Keime) pro Flächeneinheit nach Zugabe der Keime in Form von bereits gesintertem Ausgangsmaterial großer Kristallitgröße von Beginn der Rekristallisation an ist sehr hoch und steigt pro Zeiteinheit sehr viel langsamer an als in Proben ohne Grobkorn-Keimzusatz. Mit der Zugabe von derartigen Keimen hat der Fachmann somit ein wirkungsvolles Mittel in der Hand, die Korngröße und Kornverteilung von Materialien mit diskontinuierlichem Kornwachstum zu kontrollieren und zu steuern.

Als Ausführungsbeispiel wurde die Herstellung von Bariumtitanatkörpern beschrieben. Es liegt im Bereich des fachmännischen Handelns, auch bei Einsatz anderer Materialien, die zur Herstellung von Keramik eingesetzt werden und welche ein diskontinuierliches Kornwachstum zeigen, das gesteuert werden

6

soll, entsprechend der vorliegenden Verfahrensbeschreibung sinngemäß vorzugehen.

**Patentansprüche**

**1.** Verfahren zur Herstellung keramischer Sinterkörper, bei dem dem herzustellenden Sinterkörper entsprechendes Ausgangsmaterial mit einem Zusatz von bereits gesintertem Ausgangsmaterial und von Verbindungen, die mit dem Ausgangsmaterial eine Schmelzphase bilden, sich jedoch nicht in das Kristallgitter des Sinterkörpers einbauen, gesintert wird, dadurch gekennzeichnet, daß dem Ausgangsmaterial bereits gesintertes Ausgangsmaterial als Keime mit einer mittleren Kristallitgröße, die mindestens dem Dreifachen der mittleren Kristallitgröße des Ausgangsmaterials entspricht, in einer Menge von mindestens 0,1 Gew.% des zu sinternden Ausgangsmaterials zugesetzt wird.

**2.** Verfahren nach Anspruch 1, dadurch gekennzeichnet, daß als Ausgangsmaterial Erdalkali-Titanate, Erdalkali-Zirkonate, Erdalkali-Stannate und/oder Mischkristalle derselben eingesetzt werden.

**3.** Verfahren nach Anspruch 1, dadurch gekennzeichnet, daß Keime einer solchen mittleren Kristallitgröße, die dem Fünffachen der mittleren Kristallitgröße des Ausgangsmaterials entspricht, zugesetzt werden.

**4.** Verfahren nach Anspruch 1, dadurch gekennzeichnet, daß Keime einer Kristallitgröße im Bereich von $2\mu m$ bis $5,5\mu m$ zugesetzt werden.

**5.** Verfahren nach Anspruch 1, dadurch gekennzeichnet, daß Keime in einer Menge von 1 bis 5 Gew.% des zu sinternden Ausgangsmaterials zugesetzt werden.

**6.** Verfahren nach Anspruch 2, dadurch gekennzeichnet, daß dem Ausgangsmaterial als die Schmelzphase bildende Verbindung $TiO_2$ zugesetzt wird.

**7.** Verfahren nach Anspruch 2, dadurch gekennzeichnet, daß als Ausgangsmaterial $BaTiO_3$ mit einer Partikelgröße im Bereich von 0,3 bis $6\mu m$ eingesetzt wird.

**8.** Verfahren nach Anspruch 7, dadurch gekennzeichnet, daß $BaTiO_3$ einer mittleren Partikelgröße von $0,8\mu m$ eingesetzt wird.

**9.** Verfahren nach den Ansprüchen 6 und 7, dadurch gekennzeichnet, daß das atomare Verhältnis von Barium : Titan mit 1 : 1,006 bis bis 1 : 1,1 gewählt wird.

**10.** Verfahren nach Anspruch 9, dadurch gekennzeichnet, daß das atomare Verhältnis von Barium : Titan mit 1 : 1,02 gewählt wird.

**11.** Verfahren nach mindestens einem der vorhergehenden Ansprüche 2 bis 10, dadurch gekennzeichnet, daß Keime in Form von gesintertem $BaTiO_3$ zugesetzt werden.

**12.** Verfahren nach Anspruch 1, dadurch gekennzeichnet, daß mit einer geringen Menge eines Metalloxides zur Erzeugung einer N-Typ-oder P-Typ-Leitfähigkeit dotiertes Ausgangsmaterial eingesetzt wird.

**Claims**

**1.** A method of manufacturing ceramic sintered bodies, in which starting material for the sintered body to be manufactured is sintered together with an addition of already sintered starting material and compounds which form a melting phase with the starting material, but which do not incorporate in the crystal lattice of the sintered body, characterized in that nuclei in the form of already sintered starting material of an average crystallite size which corresponds to at least thrice the average crystallite size of the starting material is added to the starting material in a quantity of at least 0.1 % by weight of the starting material to be sintered.

7

**2.** A method as claimed in Claim 1, characterized in that alkaline earth titanates, alkaline earth zirconates, alkaline earth stannates and/or mixed crystals thereof are used as the starting material.

**3.** A method as claimed in Claim 1, characterized in that nuclei of an average crystallite size which corresponds to five-fold that of the average crystallite size of the starting material are added.

**4.** A method as claimed in Claim 1, characterized in that nuclei of a crystallite size in the range from 2 $\mu$m to 5.5 $\mu$m are added.

**5.** A method as claimed in Claim 1, characterized in that nuclei in a quantity of 1 to 5 % by weight of the starting material to be sintered are added.

**6.** A method as claimed in Claim 2, characterized in that $TiO_2$ is added to the starting material as the compound forming the melting phase.

**7.** A method as claimed in Claim 2, characterized in that $BaTiO_3$ with a particle size in the range from 0.3 to 6 $\mu$m is used as the starting material.

**8.** A method as claimed in Claim 7, characterized in that $BaTiO_3$ having an average particle size of 0.8 $\mu$m is used.

**9.** A method as claimed in Claims 6 and 7, characterized in that the selected atomic ratio of barium : titanium ranges from 1:1.006 to 1:1.1.

**10.** A method as claimed in Claim 9, characterized in that the selected atomic ratio of barium : titanium is 1 : 1.02.

**11.** A method as claimed in at least one of the preceding Claims 2 to 10, characterized in that nuclei in the form of sintered $BaTiO_3$ are added.

**12.** A method as claimed in Claim 1, characterized in that a starting material doped with a small quantity of a metal oxide to produce an n-type or p-type conductivity is used.

**Revendications**

**1.** Procédé pour la fabrication de corps frittés en céramique selon lequel le matériau de départ correspondant aux corps frittés à réaliser est fritté avec une addition de matériau de départ déjà fritté et de composés qui forment avec le matériau de départ une phase de fusion mais qui ne sont pas incorporés dans le réseau cristallin du corps fritté, caractérisé en ce que le matériau de départ est additionné de matériau de départ déjà fritté comme germes présentant une grosseur de cristallites moyenne correspondant à au moins trois fois la grosseur de cristallites moyenne du matériau de départ dans une quantité d'au moins 0,1% en poids du matériau de départ à fritter.

**2.** Procédé selon la revendication 1, caractérisé en ce que du titanate alcalino-terreux, du zirconate alcalino-terreux, du stannate alcalino-terreux et/ou leurs cristaux mixtes sont utilisés comme matériau de départ.

**3.** Procédé selon la revendication 1, caractérisé par l'addition de germes dont la grosseur de cristallite moyenne correspond à cinq fois la grosseur de cristallites moyenne du matériau de départ.

**4.** Procédé selon la revendication 1, caractérisé par l'addition de germes d'une grosseur de cristallites située dans la gamme de 2 $\mu$m à 5,5$\mu$m.

**5.** Procédé selon la revendication 1, caractérisé par l'addition de germes dans une quantité de 1 à 5% en poids au matériau de départ à fritter.

**6.** Procédé selon la revendication 2, caractérisé en ce que le matériau de départ est additionné du composé $TiO_2$ formant la phase de fusion.

**7.** Procédé selon la revendication 2, caractérisé en ce que BaTiO$_3$ d'unegrosseur de particules située entre 0,3 à 6 $\mu$m est utilisé comme matériau de départ.

**8.** Procédé selon la revendication 7, caractérisé par l'utilisation de BaTiO$_3$ d'une grosseur de particules moyenne de 0,8 $\mu$m.

**9.** Procédé selon les revendications 6 et 7, caractérisé en ce que comme rapport atomique baryum:titane est choisi 1 : 1,006 à 1 : 1,1.

**10.** Procédé selon la revendication 9, caractérisé en ce que comme rapport atomique baryum:titane est choisi 1 : 1,02.

**11.** Procédé selon au moins l'une des revendications précédentes 2 à 10, caractérisé par l'addition de germes sous forme de BaTiO$_3$ fritté.

**12.** Procédé selon la revendication 1, caractérisé en ce qu'une petite quantité d'un oxyde métallique est utilisée pour la réalisation d'un matériau de départ dopé à conductibilité de type N ou P.